# EUROPEAN PATENT SPECIFICATION

(11) **EP 3 912 824 B1**
(45) Date of publication and mention of the grant of the patent: **06.12.2023**
(21) Application number: 21166824.9
(22) Date of filing: 02.04.2021
(51) Int. Cl.: B41J 3/407

(54) **PRINTING APPARATUS FOR PRINTING DIRECTLY ONTO CONTAINERS**
DRUCKVORRICHTUNG ZUM DIREKTEN BEDRUCKEN AUF BEHÄLTERN
APPAREIL D'IMPRESSION DIRECTE SUR DES RÉCIPIENTS

(30) Priority: 03.04.2020 US 202016839181
(43) Date of publication of application: 24.11.2021
(73) Proprietor: Norwalt Design, Inc., Randolph, NJ 07869 (US)
(72) Inventor: SEITEL, Michael, RANDOLPH, NJ 07869 (US)
(74) Representative: EP&C

(56) References cited:
- WO-A1-2017/032553
- DE-A1-102013 213 843
- US-B2- 9 463 616

## Description

### Field of the Invention

The present invention relates to printing apparatuses, and more particularly, to printing apparatuses configured to print directly onto a container.

### Background

Currently, there are printing apparatuses for printing onto containers in the marketplace. However, these printing apparatuses are configured to perform conventional printing on mostly flat labels or flat faces of containers. Printing directly onto curved surfaces of a container is difficult in as much as the distance from the print head and the surfaces change over a curved surface. For example, conventional print heads only dispense the ink a few millimeters if they are vertically positioned. Thus, the print head needs to be as close as possible to the surface of the container to retain print quality, e.g., the clearness of images or texts. If a distance greater than a few millimeters exists between the print head and the printing surfaces, which is often the case along a curved surface, the printing process may be difficult, and the print quality may not be satisfactory. DE 10 2013 213 843 A1 discloses a container treatment device for printing containers, comprising at least one stationary printing unit and a carousel which can be rotated about a vertical carousel axis and on which there are axes of rotation rotatably arranged container receptacles. US9463616 B2 discloses a device for printing on containers including at least one printing unit including at least one print head, a conveying system, which includes a plurality of container reception means arranged for rotation about axes of rotation and which is configured such that the container reception components circulate a closed path. WO 2017/032553 A1 discloses a direct printing machine for printing containers comprising a conveyer for transporting the containers in container receptacles along a transport path, and a plurality of printing stations respectively assigned to the container receptacles.

Accordingly, there exists a need for printing apparatuses to address effective printing on curved surfaces such as rounder curved surfaces.

### Summary

According to an embodiment of the present invention, a method and apparatus is provided for printing on a curved container surface. The apparatus includes a plurality of print heads configured to print directly on a curved surface of each of the plurality of containers and a plurality of container holders for retraining each of the plurality of containers. Each of the plurality of container holders is configured to rotate a container retained therewithin and to move the container linearly relative to the plurality print heads in a continuous motion to maintain a print location on the curved surface of each of the plurality of containers at a substantially constant perpendicular distance from each of the plurality of print heads during a printing process. The plurality of print heads are configured to move horizontally in a moving direction of the plurality of containers such that the curved surfaces of the containers are at a constant velocity during the printing process. The method makes use of an apparatus according to the embodiment of the present invention.

These and other aspects of the present invention will be better understood in view of the drawings and following detailed description.

### Brief Description of the Drawings

FIG. 1 is a top view of a printing apparatus, according to an embodiment of the present invention;
FIG. 2 is a side view of a container holder of the printing apparatus in FIG. 1; and
FIG. 3A-3E are top views of a container and a print head of the printing apparatus in FIG. 1, as the container continuously moves and rotates during a printing process.

### Detailed Description

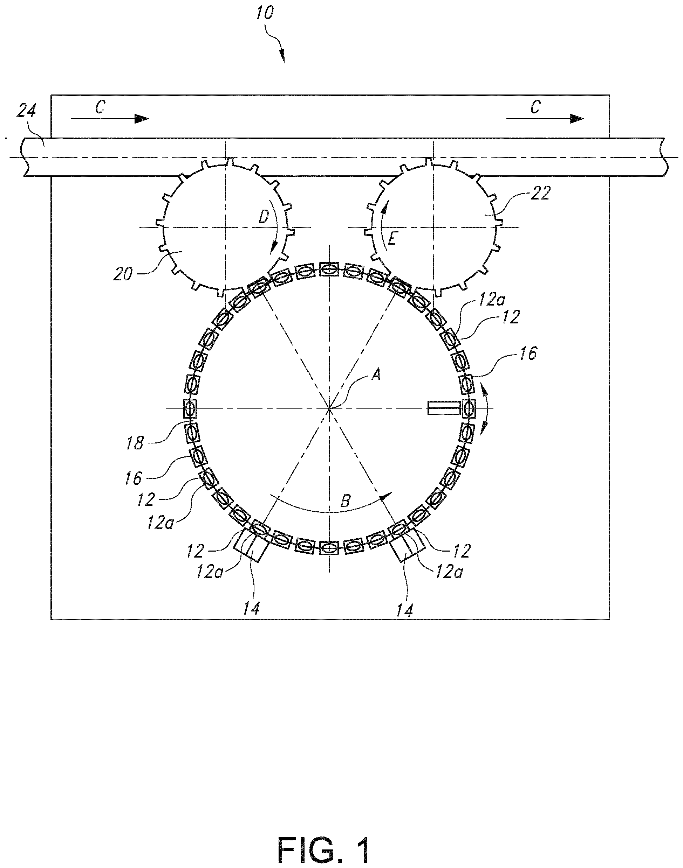

According to an embodiment of the present invention, referring to FIG. 1, there is shown a printing apparatus 10 configured to digitally print directly on the surfaces of a container 12 while the container 12 is in a continuous and constant motion. The printing apparatus 10 includes a plurality of print heads 14 for printing directly onto a curved surface 12a of the container 12 and a plurality of container holders 16 in a continuous automated operation. Each of the plurality of container holders 16 is configured to hold or retain the container 12 and is capable of providing both rotational movement and linear movement, as will be described in greater detail below. In the present illustrated embodiment, the containers 12 are shown as oval in general cross-section; but printing on containers having other non-flat cross-sectional shape is also contemplated.

Referring again to FIG. 1, the printing apparatus 10 further includes a printing wheel or turret 18 for rotating the containers 12 disposed within the plurality of container holders 16 about a turret vertical axis A, as will be described below, an infeed starwheel 20 is operable for transporting the containers 12 to the turret 18, and a discharge starwheel 22 is operable for transporting the containers 12 from the turret 18.

The circular turret 18 is configured to rotate in a counter-clockwise turret direction B about the turret vertical axis A with a constant speed. The turret 18 includes the plurality of container holders 16 mounted thereon for rotating the containers 12 to be printed. Each of the plurality of container holders 16 is disposed on the turret 18 with an evenly spaced distance therebetween.

A conveyor belt 24 moves in a longitudinal direction C and feeds the containers 12 to be printed to the infeed starwheel 20. The infeed starwheel 20 rotates in a clockwise infeed direction D, which is opposing to the rotational direction of the turret 18. Each of the containers 12 is transported to and retained in each corresponding container holder 16 via the infeed starwheel 20. Once the printing on the surface 12a of the container 12 is completed, the printed container 12 is transported from the container holder 16 via the discharge starwheel 22. The discharge starwheel 22 rotates in a clockwise discharge direction E, which is opposing to the rotational direction of the turret 18. After exiting from the container holder 16, the printed container 12 continuously moves on the conveyor belt 24 in the longitudinal direction C.

As noted above, the container 12 that may be used in connection with the present printing apparatus 10 has a shape with curved surfaces, e.g., oblong, oval, etc. Non-limiting examples of the container 12 to be printed include polyethylene terephthalate (PET) and high density polyethylene (HDPE), which may be made with monolayer or multilayer plastic materials.

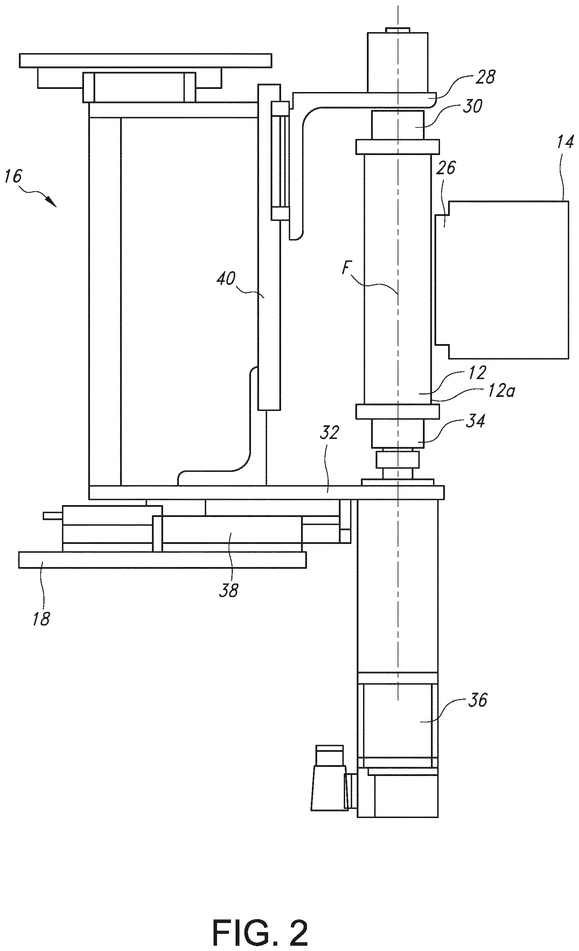

Referring to FIGS. 1 and 2, the plurality of print heads 14 are arranged outside of the turret 18 and in close proximity to the turret 18 such that a nozzle dispensing path is substantially tangent to a moving direction (e.g., counter-clockwise turret direction B) of the curved surfaces 12a of the container 12 to be printed. Each of the plurality of print heads 14 is an inkjet print head having one or more nozzles 26 for dispensing printing ink. The one or more nozzles 26 are positioned such that they are substantially parallel with a container vertical axis F. In the depicted embodiment, each of the plurality of print heads 14 has one nozzle. The print head 14 is capable of moving horizontally to allow the curved printing surfaces 12a of the container 12 to be at a constant velocity during the printing process.

Referring particularly to FIG. 2, each of the plurality of container holders 16 is configured to provide both rotational movement and linear movement during the printing process as each container holder 16 moves continuously along the counter-clockwise turret direction D, as will be described in greater detail below.

Each of the plurality of container holders 16 includes an upper slide 28 having an upper mandrel 30 mounted thereon, a lower slide 32 having a lower mandrel 34 mounted thereon. A rotary actuator 36 and a linear actuator 38 are employed to move the container 12 with respect to the print head 14, as will be described in below. Non-limiting examples of the rotary actuator and linear actuator are server motor and stepper motor.

The container 12 is secured and retained within its corresponding container holder 16 by the upper mandrel 30 and the lower mandrel 34, while moving along the counter-clockwise turret direction D and while being printed by the plurality of print heads 14. Specifically, the upper mandrel 30 and lower mandrel 34 engage with a top end portion of the container 12 and a bottom end portion of the container 12, respectively, such that each end portion of the container 12 is mounted onto the upper mandrel 30 and lower mandrel 34. The upper mandrel 30 and lower mandrel 34 are located on the upper slide 28 and lower slide 30, respectively, at a length from the plurality of the print heads 14 such that a consistent distance is maintained from the printing surfaces 12a of the container 12 to the plurality of print heads 14 during the printing process, as the container 12 rotates about the container vertical axis F. The container vertical axis F is parallel to the turret vertical axis A.

In the depicted embodiment, the lower mandrel 34 of each of the plurality of container holders 12 is operably connected to the rotary actuator 36. The rotary actuator 36 is implemented under the lower slide 32 of the container holder 12, as shown in FIG. 2, and the rotary actuator 36 provides rotational movement about the container vertical axis F during the printing process. The rotational movement ensures that during the printing process, the printed location of the printing surface of the container 12 is maintained substantially perpendicular to the stationary print head 14 during the printing process. Alternately, the rotary actuator 36 may be operably connected to the upper mandrel 30 of each of the plurality of container holders 12.

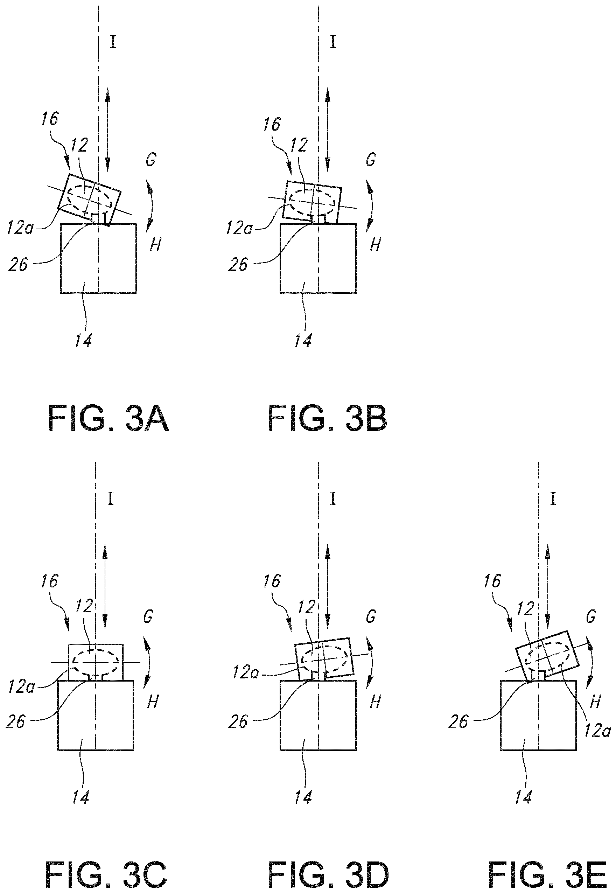

The rotary actuator 36 is configured such that it allows the container 12 to be rotated in either a counter-clockwise direction G or clockwise direction H with various desired degrees (e.g., up to 360 degrees). In the depicted embodiment, as shown in FIG. 3, the container 12 rotates about the container vertical axis F in the counter-clockwise direction G.

The linear actuator 38 is included in each of the plurality of container holders 16 for providing linear movement (toward and away from the print head 14) of the container holder 16. The linear actuator 38 is integrally connected to the lower slide 32 (which is connected to the upper slide 28 via a connecting bar 40) and disposed between the lower slide 32 and a top surface of the turret 18, as shown in FIG. 2. During the printing process, as the turret 18 continuously rotates at a constant speed and as the container 12 rotates, the linear actuator 38 allows the container 12 to move towards and away from the print head 14 along a line I. The linear movement combined with rotational movement allows a consistent distance to be retained from the printing surface of the container 12 to the print head 14, as the container 12 rotates and moves continuously along the moving direction (e.g., counter-clockwise turret direction D).

Referring to FIGS. 3A-3E, the printing process on the printing surfaces of the container 12 will be described. In the depicted embodiment, each container holder 16 having the container 12 therewithin enters a printing area with one side of the printing surface initially contacting with the nozzle 26 of the printing head 14, as shown in FIG. 3A. Due to the curved printing surfaces 12a of the container 12, the printing apparatus 10, specifically the container holder 16, is configured to rotate about the container vertical axis F as the printing on the container 12 progresses. As the container 12 is rotated about the container vertical axis F in the counter-clockwise direction G at an angular speed with the turret 18 being continuously moving in the counter-clockwise turret direction D, the nozzle 26 of the print head 14 dispenses the ink jet and prints directly on the curved printing surfaces 12a of the container 12 until the entire printing surface is printed in a desired fashion, as shown in FIG. 3B-3E. While the container 12 is being rotated during the printing process, the linear actuator 38 of the container holder 16 moves the container 12 towards and away from the nozzle 26 of the printing head 14 along the line I to maintain a consistent distance from the printing surfaces of the container 12 to the print head 14, allowing the printed materials on the curved surfaces to be in a good print quality (e.g., the clearness of images or texts).

The printing process is continuous until the entire desired printing surface 12a of the container 12 is printed by the printing head 14 in one continuous motion. The print head 14 completes the printing process as the other side of the printing surface of the container 12 is reached, as shown in FIG. 3E. During the printing process, the print head 14 may move horizontally with respect to the turret 18 as the container 12 rotates about the container vertical axis F and moves linearly towards and away from the print head 14 to maintain a substantially constant distance between the print head 14 and the location of printing on the curved surface. The rotational movement and linear movement of the container 12 ensure that the location of printing on the curved surfaces 12a of the container 12 remains generally perpendicular to the print head 14 as the container 12 rotates during the printing process.

Accordingly, the combination of the rotational movement of the turret 18, the rotational movement of container 12, and the linear movement of container 12 provides a printing technique that may be achieved rapidly and continuously, and vastly improves printing quality on curved printing surfaces of the container 12.

From the foregoing, it will be appreciated that a printing apparatus according to the present invention provides a printing technique for directly printing on a container and improving printing quality on the curved printing surfaces of the container.

In general, the foregoing description is provided for exemplary and illustrative purposes; the present invention is not necessarily limited thereto. The invention is defined in the appended claims.

## Claims

1. An apparatus (10) for printing on a plurality of containers (12), the apparatus (10) comprising:
- a plurality of print heads (14) configured to print directly on a curved surface (12a) of each of the plurality of containers (12); and
- a plurality of container holders (16) for retaining the plurality of containers (12), each of the plurality of container holders (16) configured to rotate a container (12) retained therewithin and to move the container (12) linearly relative to the plurality print heads (14) in a continuous motion to maintain a print location on the curved surface of each of the plurality of containers (12) at a substantially constant perpendicular distance from each of the plurality of print heads (16) during a printing process,
wherein the plurality of print heads (14) are configured to move horizontally in a moving direction of the plurality of the containers (12) such that the curved surfaces (12a) of the containers (12) are at a constant velocity during the printing process.

2. The apparatus of claim 1, wherein each of the plurality of container holders (16) is configured to rotate the container (12) about a container vertical axis.

3. The apparatus of claim 1, wherein each of the plurality of container holders (16) is configured to move linearly along a line that is perpendicular to the print head (14), allowing a consistent distance from the printing surface of the container (12) to the print head (14), as the container (12) rotates and moves continuously during the printing process.

4. The apparatus of claim 1, wherein each of the plurality of container holders (16) comprises an upper slide (28) having an upper mandrel (30) mounted thereon, a lower slide (32) having a lower mandrel (34) mounted thereon, a rotary actuator (36), and a linear actuator (38).

5. The apparatus of claim 4, wherein the container (12) in each of the plurality of container holders (16) is rotated by the rotary actuator (36).

6. The apparatus of claim 4, wherein the container (12) in each of the plurality of container holders (16) is moved linearly by the linear actuator (38).

7. The apparatus of claim 4, wherein the upper mandrel (30) and lower mandrel (34) engage with a top end portion of the container and a bottom end portion of the container, respectively, such that each end portion of the container (12) is mounted onto the upper mandrel (30) and lower mandrel (34).

8. The apparatus of claim 4, wherein lower mandrel (34) is operably connected to the rotary actuator (36).

9. The apparatus of claim 4, wherein the rotary actuator (36) is implemented under the lower slide (32) of the container holder (16).

10. The apparatus of claim 4, wherein the apparatus (10) further comprises a turret (18), an infeed starwheel (20), and a discharge starwheel (22).

11. The apparatus of claim 10, wherein the plurality of container holders (16) are mounted on the turret (18), with an evenly spaced distance therebetween.

12. The apparatus of claim 4, wherein the rotary actuator (36) and the linear actuator (38) are servo motor and stepper motor.

13. The apparatus of claim 10, wherein the infeed starwheel (20) transports the containers (12) from a conveyor belt (24) to the turret (18).

14. The apparatus of claim 13, wherein the discharge starwheel (22) transports the containers from the turret (18) to the conveyor belt (24).

15. The apparatus of claim 10, wherein the linear actuator (38) is connected to the lower slide (32) that is connected to the upper slide (28) via a connecting bar (40) and is disposed between the lower slide (32) and a top surface of the turret (18).

16. The apparatus of claim 5, wherein the rotary actuator (36) is configured to rotate in a clockwise direction or a counter-clockwise direction.

17. The apparatus of claim 5, wherein the container (12) is rotated 360 degrees via the rotary actuator (36).

18. A method for printing on a plurality of containers (12), wherein use is made of an apparatus according to claim 1, the method comprising:
- securing the plurality of containers (12) in the plurality of container holders (16) such that the containers (12) are retained during a printing process;
- rotating the plurality of containers (12) while the curved surfaces (12a) of the plurality of containers (12) are being printed; and
- moving the plurality of containers (12) linearly towards and away from the plurality of print heads (14) in a continuous motion to maintain a print location on the curved surface (12a) of each of the containers (12) at a substantially constant perpendicular distance from each of the print heads (14) during the printing process; and
- moving the plurality of print heads (14) horizontally in the moving direction of the plurality of containers (12) such that the curved surfaces (12a) of the containers (12) are at a constant velocity during the printing process.

## Patentansprüche

1. Vorrichtung (10) zum Bedrucken mehrerer Behälter (12), wobei die Vorrichtung (10) umfasst:
- mehrere Druckköpfe (14), die ausgestaltet sind, um direkt auf eine gekrümmte Fläche (12a) eines jeden der mehreren Behälter (12) zu drucken; und
- mehrere Behälterhalter (16) zum Halten der mehreren Behälter (12), wobei jeder der mehreren Behälterhalter (16) ausgestaltet ist, um einen darin gehaltenen Behälter (12) zu drehen und den Behälter (12) geradlinig relativ zu den mehreren Druckköpfen (14) in einer kontinuierlichen Bewegung zu bewegen, um eine Bedruckungsstelle auf der gekrümmten Fläche von jedem der mehreren Behälter (12) in einem im Wesentlichen konstanten senkrechten Abstand von jedem der mehreren Druckköpfe (16) während eines Druckvorgangs zu halten,
wobei die mehreren Druckköpfe (14) ausgestaltet sind, um sich horizontal in einer Bewegungsrichtung der mehreren Behälter (12) zu bewegen, so dass die gekrümmten Flächen (12a) der Behälter (12) während des Druckvorgangs eine konstante Geschwindigkeit haben.

2. Vorrichtung nach Anspruch 1, wobei jeder der mehreren Behälterhalter (16) ausgestaltet ist, um den Behälter (12) um eine vertikale Behälterachse zu drehen.

3. Vorrichtung nach Anspruch 1, bei der jeder der mehreren Behälterhalter (16) ausgestaltet ist, um sich geradlinig entlang einer Linie zu bewegen, die senkrecht zu dem Druckkopf (14) verläuft, was einen einheitlichen Abstand von der Bedruckungsfläche des Behälters (12) zu dem Druckkopf (14) ermöglicht, wenn sich der Behälter (12) während des Druckvorgangs kontinuierlich dreht und bewegt.

4. Vorrichtung nach Anspruch 1, wobei jede der mehreren Behälterhalterungen (16) eine obere Führung (28) mit einem daran angebrachten oberen Dorn (30), eine untere Führung (32) mit einem daran angebrachten unteren Dorn (34), einen Drehaktuator (36) und einen Linearaktuator (38) umfasst.

5. Vorrichtung nach Anspruch 4, wobei der Behälter (12) in jedem der mehreren Behälterhalter (16) durch den Drehaktuator (36) gedreht wird.

6. Vorrichtung nach Anspruch 4, wobei der Behälter (12) in jedem der mehreren Behälterhalter (16) durch den Linearaktuator (38) geradlinig bewegt wird.

7. Vorrichtung nach Anspruch 4, wobei der obere Dorn (30) und der untere Dorn (34) mit einem oberen Endabschnitt des Behälters bzw. einem unteren Endabschnitt des Behälters in Eingriff stehen, so dass jeder Endabschnitt des Behälters (12) an dem oberen Dorn (30) und dem unteren Dorn (34) angebracht ist.

8. Vorrichtung nach Anspruch 4, wobei der untere Dorn (34) mit dem Drehaktuator (36) funktionsfähig verbunden ist.

9. Vorrichtung nach Anspruch 4, wobei der Drehaktuator (36) unter der unteren Führung (32) des Behälterhalters (16) ausgeführt ist.

10. Vorrichtung nach Anspruch 4, wobei die Vorrichtung (10) ferner einen Revolver (18), ein Zuführungssternrad (20) und ein Ausgabesternrad (22) umfasst.

11. Vorrichtung nach Anspruch 10, wobei die mehreren Behälterhalter (16) auf dem Revolver (18) mit gleichmäßigem Abstand dazwischen angebracht sind.

12. Vorrichtung nach Anspruch 4, wobei der Drehaktuator (36) und der Linearaktuator (38) ein Servomotor und ein Schrittmotor sind.

13. Vorrichtung nach Anspruch 10, wobei das Zuführungssternrad (20) die Behälter (12) von einem Förderband (24) zu dem Revolver (18) transportiert.

14. Vorrichtung nach Anspruch 13, wobei das Ausgabesternrad (22) die Behälter von dem Revolver (18) zu dem Förderband (24) transportiert.

15. Vorrichtung nach Anspruch 10, wobei der Linearaktuator (38) mit der unteren Führung (32) verbunden ist, die über eine Verbindungsstange (40) mit der oberen Führung (28) verbunden ist, und zwischen der unteren Führung (32) und einer oberen Fläche des Revolvers (18) angeordnet ist.

16. Vorrichtung nach Anspruch 5, wobei der Drehaktuator (36) ausgestaltet ist, um sich in einer Richtung im Uhrzeigersinn oder in einer Richtung gegen den Uhrzeigersinn zu drehen.

17. Vorrichtung nach Anspruch 5, wobei der Behälter (12) über den Drehaktuator (36) um 360 Grad gedreht wird.

18. Verfahren zum Bedrucken mehrerer Behälter (12), wobei eine Vorrichtung nach Anspruch 1 verwendet wird, wobei das Verfahren umfasst:
- Befestigen der mehreren Behälter (12) in den mehreren Behälterhaltern (16), so dass die Behälter (12) während eines Druckvorgangs gehalten werden;
- Drehen der mehreren Behälter (12), während die gekrümmten Flächen (12a) der mehreren Behälter (12) bedruckt werden; und
- Bewegen der mehreren Behälter (12) geradlinig auf die mehreren Druckköpfe (14) zu und von ihnen weg in einer kontinuierlichen Bewegung, um eine Bedruckungsstelle auf der gekrümmten Fläche (12a) von jedem der Behälter (12) in einem im Wesentlichen konstanten senkrechten Abstand von jedem der Druckköpfe (14) während des Druckvorgangs zu halten; und
- Bewegen der mehreren Druckköpfe (14) horizontal in der Bewegungsrichtung der mehreren Behälter (12), so dass die gekrümmten Flächen (12a) der Behälter (12) während des Druckvorgangs eine konstante Geschwindigkeit haben.

## Revendications

1. Appareil (10) pour l'impression sur une pluralité de récipients (12), cet appareil (10) comprenant :
- une pluralité de têtes d'impression (14) conçues pour imprimer directement sur une surface incurvée (12a) de chacun de la pluralité de récipients (12) ; et
- une pluralité de supports de récipients (16) pour maintenir la pluralité de récipients (12), chacun de la pluralité de supports de récipients (16) étant conçu pour faire tourner un récipient (12) maintenir à l'intérieur de celui-ci et pour déplacer le récipient (12) linéairement par rapport à la pluralité de têtes d'impression (14) dans un mouvement continu afin de maintenir un emplacement d'impression sur la surface incurvée de chacun de la pluralité de récipients (12) à une distance perpendiculaire globalement constante de chacune de la pluralité de têtes d'impression (16) pendant un processus d'impression,
dans lequel la pluralité de têtes d'impression (14) sont conçues pour se déplacer horizontalement dans une direction de déplacement de la pluralité de récipients (12), de sorte que les surfaces incurvées (12a) des récipients (12) se déplacent à une vélocité constante pendant le processus d'impression.

2. Appareil selon la revendication 1, dans lequel chacun de la pluralité de supports de récipients (16) est conçu pour faire tourner le récipient (12) autour d'un axe vertical de récipient.

3. Appareil selon la revendication 1, dans lequel chacun de la pluralité de supports de récipients (16) est conçu pour se déplacer linéairement le long d'une ligne qui est perpendiculaire à la tête d'impression (14), permettant une distance constante entre la surface d'impression du récipient (12) et la tête d'impression (14), lorsque le récipient tourne et se déplace en continu pendant le processus d'impression.

4. Appareil selon la revendication 1, dans lequel chacun de la pluralité de supports de récipients (16) comprend une glissière supérieure (28) présentant un mandrin supérieur (30) monté sur celle-ci, une glissière inférieure (32) présentant un mandrin inférieur (34) monté sur celle-ci, un actionneur rotatif (36) et un actionneur linéaire (38).

5. Appareil selon la revendication 4, dans lequel le récipient (12) dans chacun de la pluralité de supports de récipients (16) est mis en rotation par l'actionneur rotatif (36).

6. Appareil selon la revendication 4, dans lequel le récipient (12) dans chacun de la pluralité de supports de récipients (16) est déplacé linéairement par l'actionneur linéaire (38).

7. Appareil selon la revendication 4, dans lequel le mandrin supérieur (30) et le mandrin inférieur (34) s'emboîtent respectivement avec une portion d'extrémité supérieure et une portion d'extrémité inférieure, de sorte que chacun portion d'extrémité du récipient (12) est montée sur le mandrin supérieur (30) et le mandrin inférieur (34).

8. Appareil selon la revendication 4, dans lequel le mandrin inférieur (34) est connecté de manière opérationnelle à l'actionneur rotatif (36).

9. Appareil selon la revendication 4, dans lequel l'actionneur rotatif (36) est implémenté sous la glissière inférieure (32) du support de récipient (16).

10. Appareil selon la revendication 4, dans lequel l'appareil (10) comprend en outre une tourelle (18), une étoile d'entrée (20) et une étoile de sortie (22).

11. Appareil selon la revendication 10, dans lequel la pluralité de supports de récipients (16) sont montés sur la tourelle (18), avec une distance régulière entre eux.

12. Appareil selon la revendication 4, dans lequel l'actionneur rotatif (36) et l'actionneur linéaire (38) sont un servomoteur et un moteur pas-à-pas.

13. Appareil selon la revendication 10, dans lequel l'étoile d'entrée (20) transporte les récipients (12) d'un convoyeur à courroie (24) à la tourelle (18).

14. Appareil selon la revendication 13, dans lequel l'étoile de sortie (22) transporte les récipients de la tourelle (18) au convoyeur à courroie (24).

15. Appareil selon la revendication 10, dans lequel l'actionneur linéaire (38) est connecté à la glissière inférieure (32) qui est connectée à la glissière supérieure (28) via une barre de connexion (40) et est disposé entre la glissière inférieure (32) et une surface supérieure de la tourelle (18).

16. Appareil selon la revendication 5, dans lequel l'actionneur rotatif (36) est conçu pour tourner dans un sens horaire ou un sens anti-horaire.

17. Appareil selon la revendication 5, dans lequel le récipient (12) est tourné de 360 degrés via l'actionneur rotatif (36).

18. Procédé pour l'impression d'une pluralité de récipients (12), dans lequel on utilise un appareil selon la revendication 1, ce procédé comprenant :
- la fixation de la pluralité de récipients (12) dans la pluralité de supports de récipients (16) de sorte que les récipients (12) sont maintenus pendant un processus d'impression ;
- la rotation de la pluralité de récipients (12) pendant que les surfaces incurvées (12a) de la pluralité de récipients (12) sont imprimées ; et
- le déplacement de la pluralité de récipients (12) linéairement en direction et en s'éloignant de la pluralité de têtes d'impression (14) dans un mouvement continu afin de maintenir un emplacement d'impression sur la surface incurvée (12a) de chacun des récipients (12) à une distance perpendiculaire globalement constante par rapport à chacune des têtes d'impression (14) pendant le processus d'impression ; et
- le déplacement de la pluralité de têtes d'impression (14) horizontalement dans la direction de déplacement de la pluralité de récipients (12) de sorte que les surfaces incurvées (12a) des récipients (12) se déplacent à une vélocité constante pendant le processus d'impression.
